**Europäisches Patentamt**

**European Patent Office**

**Office européen des brevets**

(11) Veröffentlichungsnummer: **0 187 334**
**A2**

# (12) EUROPÄISCHE PATENTANMELDUNG

(21) Anmeldenummer: **85116202.4**

(22) Anmeldetag: **18.12.85**

(51) Int. Cl.⁴: **G 01 F 19/00**
**B 65 D 5/36, B 65 D 5/42**
**B 65 D 5/60**

(30) Priorität: **11.01.85 DE 8500533 U**

(43) Veröffentlichungstag der Anmeldung:
**16.07.86 Patentblatt 86/29**

(84) Benannte Vertragsstaaten:
**AT BE CH DE FR GB IT LI NL**

(71) Anmelder: **BAYER AG**
**Konzernverwaltung RP Patentabteilung**
**D-5090 Leverkusen 1 Bayerwerk(DE)**

(72) Erfinder: **Datum, Peter**
**Hackenbroicherstrasse 71a**
**D-5024 Pulheim(DE)**

(72) Erfinder: **Hartmann, Jürgen**
**Gneisenaustrasse 4**
**D-4047 Dormagen 1(DE)**

(72) Erfinder: **Krings, Siegfried, Dipl.-Ing.**
**Pletschbachstrasse 27**
**D-4047 Dormagen 1(DE)**

(72) Erfinder: **Treichel, Heinz**
**Zonser Strasse 37**
**D-4047 Dormagen(DE)**

(54) **Messbehältnis für feinkörnige Granulate oder Pulver.**

(57) Das Meßbehältnis besteht aus einem auffaltbaren, quaderförmigen Behälter, der ein aus einer transparenten Folie (17) bestehendes Innenfutter aufweist und mit einem zusammensteckbaren, durch eine Einsteckflasche (21) verschließbaren Boden (5, 6, 7, 8) versehen ist. Im Bodenbereich ist die Folie (17) zugesiegelt (Siegelnaht 18). Vorteilhaft ist die Folie (17) außerhalb des Bodenbereichs in den Behälter eingeklebt. Das Meßbehältnis hat den Vorteil eines geringen Raumbedarfs in der geschlossenen Packung, ist wirtschaftlich herzustellen, bietet eine leichte Handhabung und Staubdichtigkeit und vor allem eine problemlose Entsorgung nach der vollständigen Entleerung der Packung.

EP 0 187 334 A2

FIG. 1

- 1 -

0187334

BAYER AKTIENGESELLSCHAFT          5090 Leverkusen, Bayerwerk

Konzernverwaltung RP
Patentabteilung                   Ki/m-c


Meßbehältnis für feinkörnige Granulate oder Pulver

Die Erfindung betrifft ein Meßbehältnis für feinkörnige
Granulate oder Pulver, bestehend aus einem auffaltbaren
quaderförmigen Behälter.

Solche Meßbehälter werden häufig einer Pulver- oder
Granulatpackung vom Hersteller beigefügt, um dem Verbraucher das Abfüllen einer bestimmten Pulvermenge zu
erleichtern. Bekannt sind z.B. Meßbehälter, die aus
kegelförmigen Hohlkörpern bestehen. In vielen Fällen
ist es nicht erwünscht, daß der Meßbehälter im Inneren
der Packung teilweise oder ganz in das Produkt eintaucht. Sofern derartige Meßbehälter aus diesen Gründen
getrennt vom Produkt in der Packung untergebracht werden,
so haben sie den Nachteil, daß zusätzlicher Raum beansprucht wird und die Packung dementsprechend von vornherein wesentlich größer ausgelegt sein muß. Der große
Volumenbedarf bedingt auch ein großes Transportvolumen
der Fertigpackung, so daß höhere Versand- und Lagerkosten
entstehen. Aus diesen Gründen sind auffaltbare Meßbehälter vorzuziehen, die der Packung in Form eines abgewickelten Zuschnitts beigefügt werden und dementsprechend
wenig Platz beanspruchen. Ausgehend von diesem Zuschnitt kann der Kunde nach dem erstmaligen Öffnen

Le A 23 481-Ausland

der Packung den Meßbecher selbst zusammenbauen.

Von der Praxis her werden folgende Anforderungen an derartige Meßgefäße gestellt:

a)   geringer Raumbedarf in der geschlossenen Packung

b)   niedrige Herstellungs- und Konfektionierungskosten

c)   Verbraucherfreundlichkeit (leichte Handhabung)

d)   Staubdichtigkeit

e)   problemlose Entsorgung nach der vollständigen Entleerung der Packung.

Dem Problem der Staubdichtigkeit und der Entsorgung (Punkt d) und e)) wurde bisher wenig Beachtung geschenkt. Es leuchtet ein, daß beim Abfüllen von granulat- und pulverförmigem Gut die immer vorhandenen Feinkornanteile (Produktstaub) durch Fugen bzw. Ritzen im Meßbehälter nach außen dringen können und dann unter Umständen eine Gefahrenquelle für den Verbraucher darstellen. Das Problem der Entsorgung tritt z.B. auf, wenn der aus einem Pappkarton bestehende Meßbecher verbrannt werden soll, nachdem die Packung aufgebraucht ist. Dabei können unter Umständen gesundheitsschädliche Stoffe entstehen, wenn im Meßbecher noch Produktrückstände vorhanden sind.

Der Erfindung liegt die Aufgabe zugrunde, einen Meßbecher zu schaffen, bei dem alle Aspekte a) bis e) verwirklicht sind.

Le A 23 481

Diese Aufgabe wird erfindungsgemäß dadurch gelöst, daß der auffaltbare Behälter ein aus einer transparenten Folie bestehendes Innenfutter aufweist, daß der Behälter mit einem zusammensteckbaren, durch eine Einstecklasche verschließbaren Boden versehen ist und daß die Folie im Bodenbereich zugesiegelt ist.

Vorteilhaft ist die Folie außerhalb des Bodenbereichs in den Behälter eingeklebt.

Bei einer bevorzugten Ausführung der Erfindung sind an mindestens einer Seitenwand des Behälters transparente Sichtfenster angeordnet. Vorteilhaft sind die Seitenwände im Bereich der Sichtfenster skaliert und mit Gewichtsangaben bedruckt.

Eine weitere Verbesserung besteht darin, daß zwei gegenüberliegende Seitenwände, an denen keine Sichtfenster angebracht sind, mittig und parallel zur Behälterlängsrichtung Knickfalten aufweisen. Dadurch wird das Aufrichten bzw. Auffalten des Meßbechers besonders leicht gemacht.

Mit der Erfindung werden folgende Vorteile erzielt:

1. In der verschlossenen Packung ist der zusätzliche Raumbedarf minimal, weil das Meßbehältnis in zusammengelegter Form praktisch keinen Platz beansprucht.

Le A 23 481

2. Die Herstellungs- und Konfektionierungskosten für den Meßbecher sind gering. Insbesondere steht einer vollautomatischen Beistellung des Meßbechers durch eine Verpackungsmaschine nichts im Wege.

3. Das aus einer Kunststoff-Folie bestehende Innenfutter gewährleistet, daß der Meßbehälter staubdicht ist und daß bei normalem Gebrauch keine Produktrückstände darin verbleiben.

4. Der Meßbecher kann vom Verbraucher ohne schriftliche Anleitungen ohne weiteres mit wenigen Handgriffen aufgerichtet und zusammengebaut werden. Die Handhabung ist einfach und bequem. Insbesondere kann aus einer Großpackung ein relativ großes Produktvolumen (ca. 0,5 bis 2 l) mit ausreichender Dosiergenauigkeit entnommen werden.

5. Das Meßgefäß (Außenwände) kann als zusätzlicher Informationsträger, z.B. für Werbezwecke, benutzt werden.

Im folgenden wird die Erfindung anhand von Zeichnungen näher erläutert. Es zeigen

Fig. 1    das Meßbehältnis in flachliegendem Zustand (flach übereinander gefaltet) und

Fig. 2    das fertig aufgerichtete Meßbehältnis in perspektivischer Darstellung.

Le A 23 481

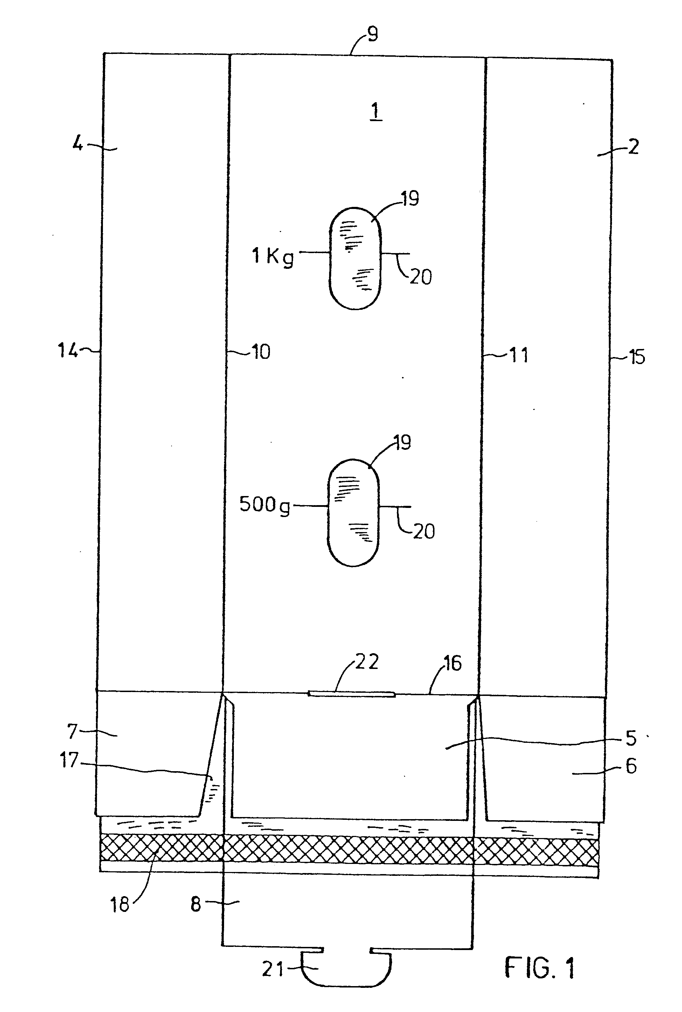

Das in Fig. 1 dargestellte flachliegende Meßbehältnis
besteht aus den Seitenwänden 1, 2, 3 und 4 (Wände 1 und
3 deckungsgleich) und den Bodenteilen 5, 6, 7 und 8.
Am oberen Rand 9 ist das Behältnis offen.

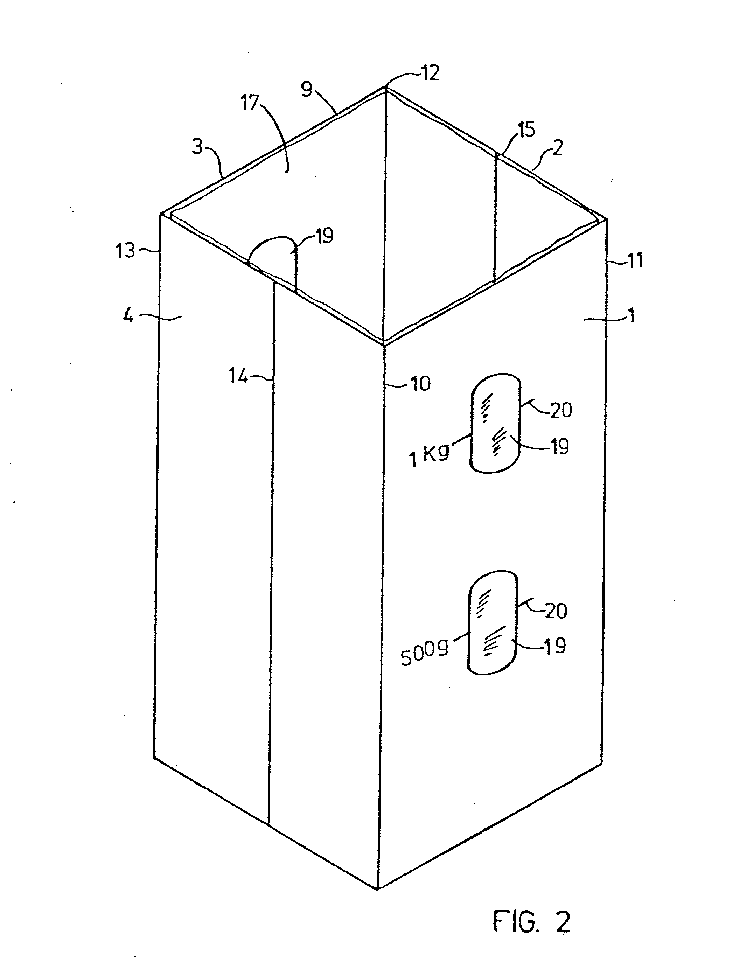

Im Gegensatz zu bekannten Meßgefäßen dieser Art sind die
Seitenflächen 1, 2 , 3 und 4 bereits im flachliegenden
Zustand rundum geschlossen. Beim Aufstellen des Meßgefäßes müssen also nicht zwei entsprechende Seitenkanten
durch Klebung oder mittels Laschen miteinander verbunden
werden. Zu diesem Zweck sind sämtliche Seitenkanten
10, 11, 12, 13 (siehe auch Fig. 2) als Knickfalten ausgebildet. Zusätzliche Knickfalten 14 und 15 sind in
Längsrichtung in der Mittellinie der Seitenflächen 2 und
4 vorgesehen. In Fig. 1 sind dementsprechend jeweils nur
die Hälfte der Seitenflächen 2 und 4 sichtbar. In ähnlicher Weise sind im Bodenbereich Knickfalten 16 in
Umfangsrichtung zur Faltung der Bodenteile 5, 6, 7, 8
vorhanden.

Das Meßbehältnis ist innen vollständig mit einer transparenten Folie 17, z.B. aus Polyethylen, Polypropylen
oder transparenter Verbundfolie (z.B. Zellglas/Polyethylen) ausgekleidet. Dieses Innenfutter ist außerhalb
des Bodenbereiches mit der Behälterinnenwand verklebt.
Im Bodenbereich ist das Innenfutter durch eine Siegelnaht
18 verschlossen. Im Beipackzustand (Meßgefäß flachliegend;
Fig. 1) kann das Innenfutter als ein unten geschlossener
(Siegelnaht 18) und oben offener, flach gedrückter Kunststoffbeutel angesehen werden.

Le A 23 481

An den gegenüberliegenden Seitenwänden 1 und 3 sind auf verschiedener Höhe Sichtfenster 19 angebracht. Es versteht sich, daß die Sichtfenster 19 durch die Folie 17 abgedeckt sind.In Höhe der Sichtfenster sind Markierungsstriche 20 mit Gewichts- oder Volumenangaben für das Füllgut aufgedruckt.

Nach dem Öffnen einer neuen Packung wird das oben aufliegende flachliegende Meßgefäß entnommen und durch Druck auf die seitlichen Knickfalten 14 und 15 aufgerichtet. anschließend werden die Bodenteile 5, 6, 7, 8 nach innen umgelegt und der überstehende Teil des Innenfutters 17 nach innen gedrückt. Sodann wird der Boden mittels der Einstecklasche 21, die in den Schlitz 22 geschoben wird, verriegelt. Das Meßbehältnis ist jetzt fertig aufgestellt und gebrauchsfertig (siehe Fig. 2).

Als Ausgangsmaterial für das Meßbehältnis dient Karton in den für Packmittel üblichen Materialstärken. Das Innenfutter, d.h. die Folie 17, hat eine Stärke von 10 µm bis 50 µm und besteht aus üblichen thermoplastischen und gut schweißbaren Kunststoffen wie z.B. Polyethylen oder Polypropylen.

Das neue Meßbehältnis ist platzsparend, preisgünstig, einfach in der Handhabung und bietet eine hohe Sicherheit und Verbraucherfreundlichkeit. Typische Anwendungsgebiete sind die Dosierung von Waschpulver, Pulver- oder granulatförmigen Pflanzenschutzpräparaten oder Futtermitteln bzw. Futtermittelzusätzen.

Le A 23 481

Patentansprüche:

1.  Meßbehältnis für feinkörnige Granulate oder Pulver, bestehend aus einem auffaltbaren quaderförmigen Behälter, dadurch gekennzeichnet, daß der Behälter ein aus einer transparenten Folie (17) bestehendes Innenfutter aufweist, mit einem zusammensteckbaren, durch eine Einstecklasche (21) verschließbaren Boden (5,6,7,8) versehen ist und die Folie (17) im Bodenbereich zugesiegelt (18) ist.

2.  Meßbehältnis nach Anspruch 1, dadurch gekennzeichnet, daß die Folie (17) außerhalb des Bodenbereiches in den Behälter eingeklebt ist.

3.  Meßbehältnis nach Anspruch 1 bis 2, dadurch gekennzeichnet, daß an mindestens einer Seitenwand (1) des Behälters Sichtfenster (19) angeordnet sind.

4.  Meßbehältnis nach Anspruch 1 bis 3, dadurch gekennzeichnet, daß zwei gegenüberliegende Seitenwände (2,4,), an denen keine Sichtfenster (19) angebracht sind, mittig und parallel zur Behälterlängsrichtung Knickfalten (14,15) aufweisen.

5.  Meßbehältnis nach Anspruch 3 bis 4, dadurch gekennzeichnet, daß die Seitenwände (1,3) im Bereich der Sichtfenster (19) skaliert (20) und mit Gewichtsangaben versehen sind.

Le A 23 481

FIG. 1

FIG. 2